# EUROPÄISCHE PATENTSCHRIFT

(11) **EP 3 974 680 B1**
(45) Veröffentlichungstag und Bekanntmachung des Hinweises auf die Patenterteilung: **29.11.2023**
(21) Anmeldenummer: 20198218.8
(22) Anmeldetag: 24.09.2020
(51) Int. Cl.: F16H 55/06, B29D 15/00

(54) **MEHRKOMPONENTENRAD, ZAHNRAD UND PLANETENGETRIEBE**
MULTI-COMPONENT WHEEL, TOOTHED WHEEL AND PLANETARY GEAR
ROUE À COMPOSANTS MULTIPLES, PIGNON ET TRAIN ÉPICYCLOÏDAL

(43) Veröffentlichungstag der Anmeldung: 30.03.2022
(73) Patentinhaber: IMS Gear SE & Co. KGaA, 78166 Donaueschingen (DE)
(72) Erfinder: Rieple, Adrian, 78183 Hüfingen (DE); Oberle, Stephan, 78050 Villingen-Schwenningen (DE); Birk, Sebastian, 78647 Trossingen (DE)
(74) Vertreter: Westphal, Mussgnug & Partner Patentanwälte mbB

(56) Entgegenhaltungen:
- DE-A1- 10 127 224
- DE-A1-102014 115 804
- DE-A1-102018 209 668
- JP-A- 2003 021 223
- US-A- 3 200 665

## Beschreibung

Die vorliegende Erfindung betrifft ein Mehrkomponentenrad mit den Merkmalen des Patentanspruchs 1, ein Zahnrad, insbesondere ein Planetenrad, mit den Merkmalen des Patentanspruchs 19 sowie ein Planetengetriebe mit den Merkmalen des Patentanspruchs 20.

Mehrkomponentenräder sind aus dem Stand der Technik in unterschiedlichen Ausgestaltungen vorbekannt und werden beispielsweise für Zahnräder oder Planetenräder in leistungsverzweigten Getrieben eingesetzt. Bei derartigen Bauteilen wird zunächst ein Innenteil, bevorzugt aus Metall, als Einlegeteil bereitgestellt und in einem darauffolgenden Herstellungsschritt zur Bildung des Mehrkomponentenrads mit einem Kunststoff umspritzt. Dafür wird das Innenteil in ein Spritzgusswerkzeug eingesetzt und anschließend wird über wenigstens einen Anspritzabschnitt verflüssigter Kunststoff in das Spritzgusswerkzeug eingebracht.

Durch das Umspritzen des Innenteils mit dem Kunststoff wird eine form- und/oder materialschlüssige Verbindung zwischen dem Außenteil und dem Innenteil bewerkstelligt. Dabei wird das Au-ßenteil im Stand der Technik nicht nur auf eine äußere Mantelfläche des Innenteils aufgeformt, sondern es werden ebenfalls die beiden Stirnseiten des Innenteils bereichsweise zur Ausbildung einer Axialsicherung umspritzt, um eine Axialsicherung für den Außenring auf dem Innenteil auszubilden.

Um hohe Wandstärken und eine damit verbundene Lunkerbildung zu vermeiden, müssen in dem Außenteil homogene Kunststoff-Wandstärken umgesetzt werden.

Im Stand der Technik werden konstante Kunststoff-Wandstärken in dem Außenteil durch eine Anpassung relevanter Kunststoffdurchmesser erreicht. Diese relevanten Kunststoffdurchmesser sind beispielsweise bei einem Rad der Außendurchmesser und bei einem Zahnrad der Fußkreisdurchmesser der Verzahnung. Der relevante Kunststoffdurchmesser ist entweder ausreichend groß zu bemessen, damit eine umlaufende Nut beidseitig in die Stirnseiten des Außenteils eingebracht werden kann, oder der relevante Kunststoffdurchmesser ist so weit zu reduzieren, bis das Außenteil ringförmig mit einer konstanten Kunststoff-Wandstärke auf dem Innenteil ausgebildet werden kann.

Weiteren Stand der Technik bilden die Druckschriften US 3 200 665 A, DE 10 2014 115 804 A1, DE 10 2048 209 668 A1, JP 2003 021 223 A und DE 101 27 224 A1.

Als nachteilig hat sich erwiesen, dass die reduzierten Kunststoff-Wandstärken zwar eine Lunkerbildung vermeiden, jedoch andererseits eine Spannungsrissbildung aufgrund von Eigenspannungen begünstigt wird. Darüber hinaus hat es sich als nachteilig erwiesen, dass die aus dem Stand der Technik bekannten Mehrkomponentenräder bzw. deren Außenteil nur eine geringe Verformbarkeit in der Axialrichtung und/oder der Radialrichtung aufweisen und es daher häufig zu ungünstigen Spannungsverhältnissen kommt, welche eine Spannungsrissbildung und ein daraus resultierendes Bauteilversagen begünstigen.

Hier setzt die vorliegende Erfindung an.

Es ist daher die Aufgabe der vorliegenden Erfindung, ein verbessertes Mehrkomponentenrad bereitzustellen, das in zweckmäßiger Weise die aus dem Stand der Technik bekannten Mehrkomponentenräder verbessert. Das verbesserte Mehrkomponentenrad soll einerseits eine Lunkerbildung aufgrund hoher Wandstärken und andererseits eine Spannungsrissbildung aufgrund hoher Eigenspannungen vermeiden und eine vergrößerte Verformbarkeit in der Axial- und/oder der Radialrichtung aufweisen.

Diese Aufgaben werden durch ein Mehrkomponentenrad mit den Merkmalen des Patentanspruchs 1, durch ein Zahnrad, insbesondere ein Planetenrad, mit den Merkmalen des Patentanspruchs 19 sowie durch ein Planetengetriebe mit den Merkmalen des Patentanspruchs 20 gelöst.

Weitere vorteilhafte Ausgestaltungen der Erfindung werden in den Unteransprüchen angegeben.

Das erfindungsgemäße Mehrkomponentenrad mit den Merkmalen des Patentanspruchs 1 weist eine Drehachse, eine erste Stirnseite und eine zweite Stirnseite auf. Darüber hinaus umfasst das Mehrkomponentenrad ein Innenteil und ein Außenteil, welches aus einem Kunststoff hergestellt ist und wenigstens einen Anspritzabschnitt aufweist, wobei das Außenteil auf einer äußeren Mantelfläche des Innenteils form- und/oder materialschlüssig an dem Innenteil angeordnet ist, und wobei das Außenteil auf der ersten und/oder der zweiten Stirnseite wenigstens eine in Umlaufrichtung um die Drehachse freistehende Lasche aufweist, die über die jeweilige Stirnseite des Innenteils ragt. Der vorliegenden Erfindung liegt somit die Idee zugrunde, eine axiale Abstützung des Außenteils an dem Innenteil durch wenigstens eine in Umlaufrichtung unterbrochene Lasche zu realisieren, die eine höhere Verformbarkeit, insbesondere in der Axialrichtung, also der Drehachse, zulässt.

Erfindungsgemäß wird hier und im Nachfolgenden unter der Lasche ein in Richtung der Drehachse abstehender Steg verstanden, der ausgehend von einer inneren Mantelfläche des Außenteils absteht und zumindest abschnittsweise auf eine der Stirnseiten des Innenteils ragt. Die innere Mantelfläche des Außenteils hat einen Innendurchmesser, der näherungsweise dem Außendurchmesser der äußeren Mantelfläche des Innenteils entspricht.

Als ein Anspritzabschnitt wird im Zusammenhang dieser Erfindung ein Abschnitt bezeichnet, in dem mindestens ein Anspritzpunkt, Filmanguss, Schirmanguss oder dergleichen angeordnet ist. Der Anspritzabschnitt zeichnet sich dadurch aus, dass dort in Herstellungsprozessen - wie zum Beispiel beim Spritzgießen - verflüssigter Werkstoff in das Werkzeug zugeführt wird und sich von dort in einer Kavität verteilt, die in der Form im Wesentlichen dem späteren Werkstück entspricht. Von dem mindestens einem Anspritzabschnitt verteilt sich der verflüssigte Werkstoff vorzugsweise gleichmäßig in der Kavität, wobei beispielsweise bei der Anwendung mehrere Anspritzabschnitte vorhanden sind oder bei ringförmigen Kavitäten der verflüssigte Werkstoff aus mehreren Fließrichtungen aufeinandertrifft und in diesem Bereich eine sogenannte Bindenaht entsteht.

Weiterhin sei angemerkt, dass hier und im Nachfolgenden unter einer form- und/oder materialschlüssigen Verbindung zwischen dem Außenteil und dem Innenteil auch eine näherungsweise spielfreie Welle-Nabe-Verbindung zwischen dem Innenteil und dem Außenteil verstanden werden kann, welche zum Übertragen eines Drehmoments zwischen dem Innenteil und dem Außenteil ausgebildet sein kann. Allerdings muss nicht zwangsweise die Welle-Nabe-Verbindung zwischen dem Innenteil und dem Außenteil konfiguriert sein, ein Drehmoment zu übertragen. Dies kann beispielsweise dann der Fall sein, wenn - wie nachfolgend noch erläutert werden wird - das Innenteil ein Wälzlager ist.

Eine vorteilhafte Weiterbildung der vorliegenden Erfindung sieht vor, dass das Außenteil einen Zahnkranz aufweist. Der Zahnkranz kann mit einer beliebigen Verzahnung zur Bildung eines Stirnrades, eines Kegelrades oder dergleichen versehen sein.

Auch ist es vorteilhaft, wenn mehr als eine Lasche in Umlaufrichtung um die Drehachse auf der ersten Stirnseite und/oder der zweiten Stirnseite vorgesehen ist. Vorzugsweise sind die Laschen in der Umlaufrichtung um die Drehachse symmetrisch angeordnet.

Auch kann gemäß einer weiteren vorteilhaften Ausgestaltung der vorliegenden Erfindung die Anzahl der Laschen in Umlaufrichtung auf der ersten Stirnseite und/oder der zweiten Stirnseite gleich sein. Die Anzahl der Laschen in Umlaufrichtung auf der ersten Stirnseite und/oder der zweiten Stirnseite kann beliebig gewählt werden.

Nach Maßgabe einer weiteren vorteilhaften Ausgestaltung der vorliegenden Erfindung ist die Anzahl der Laschen in Umlaufrichtung auf der ersten Stirnseite und/oder der zweiten Stirnseite an die Anzahl der Anspritzabschnitte angepasst. Für den Fall, dass die Anzahl der Laschen in Umlaufrichtung auf der ersten Stirnseite und/oder der zweiten Stirnseite der Anzahl der Anspritzabschnitte entspricht, kann eine symmetrische Verteilung der Laschen in Umlaufrichtung auf der ersten Stirnseite und/oder der zweiten Stirnseite zwischen den Bindenähten und den Anspritzabschnitten realisiert werden.

Gemäß einer weiteren vorteilhaften Ausgestaltung der vorliegenden Erfindung steht die mindestens eine Lasche von einem von der ersten Stirnseite und/oder der zweiten Stirnseite zurückversetzten Flansch ab. Der zurückversetzte Flansch ist bevorzugt mittig zwischen der ersten Stirnseite und der zweiten Stirnseite angeordnet und kann ferner in einer bevorzugten Ausgestaltung eine sich in Richtung der Drehachse verjüngende Form aufweisen. Auch kann der Flansch zwischen der ersten Stirnseite und der zweiten Stirnseite außermittig angeordnet sein. Eine außermittige Anordnung könnte beispielsweise bei einer Schrägverzahnung auf dem Außenteil vorteilhaft sein.

Der Flansch erstreckt sich beabstandet von der jeweiligen Stirnseite von einer radial außenliegenden Außenkante zu einer radial weiter innenliegenden Innenkante, wobei ein Abstand zwischen den zwei Außenkanten größer sein kann als ein Abstand zwischen den zwei Innenkanten. Weiterhin ist es bevorzugt, wenn der Abstand zwischen der ersten Stirnseite und/oder der Abstand zwischen der zweiten Stirnseite und dem zurückversetzten Flansch näherungsweise mindestens ein Viertel des Abstandes zwischen der ersten Stirnseite und der zweiten Stirnseite beträgt.

Nach Maßgabe einer weiteren bevorzugten Ausgestaltung der vorliegenden Erfindung wird die mindestens eine Lasche von mindestens einer freistehenden L-förmigen Zunge gebildet, wobei gemäß einer besonders bevorzugten Ausgestaltung der vorliegenden Erfindung die jeweilige mindestens eine freistehende L-förmigen Zunge von dem zurückversetzten Flansch absteht. Die mindestens eine L-förmige Zunge kann einen ersten Teilabschnitt und einen zweiten Teilabschnitt aufweisen, wobei der erste Teilabschnitt unmittelbar mit dem zurückversetzten Flansch verbunden ist und der zweite Teilabschnitt in der Radialrichtung nach innen steht und die mindestens eine Lasche bildet. Mit anderen Worten ist in dieser bevorzugten Ausgestaltung der erste Teilabschnitt näherungsweise parallel zu der Drehachse oder der Mantelfläche des Innenteils ausgerichtet, währenddessen der zweite Teilabschnitt parallel zu der ersten Stirnseite und/oder der zweiten Stirnseite angeordnet ist. Die L-förmige Zunge kann im Vergleich zu einer herkömmlichen Lasche - unter der Maßgabe, dass identische Werkstoffe verwendet werden - eine größere Verformung erfahren, ohne dass kritische Spannungsspitzen erreicht werden.

Nach Maßgabe einer Weiterbildung der Erfindung ist es vorgesehen, dass die mindestens eine Lasche und/oder der zurückversetzte Flansch mindestens eine Aussparung aufweist. Die mindestens eine Aussparung soll die Verformbarkeit der jeweiligen Lasche verbessern und folglich die axialen Schwundspannungen reduzieren. Die Aussparung kann beispielsweise die jeweilige Lasche durchbrechen, wodurch die Lasche U-förmig oder bogenförmig ausgebildet sein kann. Die mindestens eine Aussparung kann weiterhin nicht nur in der mindestens einen Lasche ausgebildet sein, sondern beispielsweise in dem zurückversetzten Flansch und diesen im Bereich der Lasche schwächen, oder diesen sogar ebenfalls vollständig durchbrechen. Auch kann die mindestens eine Aussparung die mindestens eine Lasche bzw. die L-förmige Zunge mehrzüngig ausbilden. Die jeweilige Lasche weist somit mehrere Zungen mit einem ersten und einem zweiten Teilabschnitt, vorzugweise nur einem zweiten Teilabschnitt, auf, der vereinzelt parallel zu der ersten Stirnseite und/oder der zweiten Stirnseite angeordnet ist und axial das Innenteil festlegen bzw. umgreifen kann.

Gemäß einer weiteren vorteilhaften Ausgestaltung der vorliegenden Erfindung ragt die mindestens eine Lasche aus einer Ausnehmung heraus, wobei sich die Ausnehmung in Richtung der Drehachse, in radialer Richtung gesehen, bevorzugt U-förmig um die mindestens eine Lasche erstreckt. Die Ausnehmung ist dabei vorzugsweise derart gestaltet, dass die effektive Länge der Lasche vergrößert wird, um eine möglichst hohe Auslenkung des freien Endes der Lasche zu ermöglichen, ohne dass kritische Spannungsspitzen erreicht werden. Für den Fall, dass die mindestens eine Lasche als L-förmige Zunge ausgebildet ist, ist die Ausnehmung - in Richtung der Drehachse gesehen - in einer beliebigen Form um die Lasche ausgebildet und kann in den zurückversetzten Flansch eingearbeitet oder eingeformt sein. Die beiden offenen Enden der Ausnehmung können auf der inneren Mantelfläche liegen. Es kann bevorzugt sein, dass die Ausnehmung ausgehend von der jeweilige Stirnseite in Richtung der Drehachse fluchtend zu der Innenkante endet.

Eine weitere vorteilhafte Ausgestaltung der vorliegenden Erfindung sieht vor, dass wenigstens eine Tasche in dem Außenteil vorgesehen ist, die die erste Stirnseite und die innere Mantelfläche des Außenteils verbindet und/oder die zweite Stirnseite und die innere Mantelfläche des Außenteils verbindet. Die wenigstens eine Tasche reduziert lokal die effektive Wandstärke des Kunststoffes, wodurch die Gefahr von Lunkerbildung reduziert wird.

Weiterhin hat es sich als vorteilhaft erwiesen, wenn die wenigstens eine Tasche die äußere Mantelfläche des Innenteils bereichsweise freigelegt. Die Tasche erstreckt sich folglich parallel zu der Drehachse bereichsweise über oder oberhalb der äußeren Mantelfläche des Innenteils, wodurch die Kontaktfläche zwischen der äußeren Mantelfläche des Innenteils und der inneren Mantelfläche des Außenteils reduziert ist. Bevorzugt erstreckt sich die Tasche ausgehend von der jeweiligen Stirnseite des Innenteils in Richtung der jeweiligen anderen Stirnseite über wenigstens 1% und maximal 50% einer Breite des Innenteils, parallel zur der Drehachse gemessen. Bei einer asymmetrischen Bundanordnung kann sich die Tasche, ausgehend von der jeweiligen Stirnseite des Innenteils in Richtung der jeweiligen anderen Stirnseite, über bis zu 90% einer Breite des Innenteils, parallel zur der Drehachse gemessen, erstrecken.

Weiterhin hat es sich als vorteilhaft erwiesen, wenn die Anzahl der Laschen auf der ersten Stirnseite und/oder auf der zweiten Stirnseite gleich sind, und/oder dass die Anzahl der Taschen auf der ersten Stirnseite und/oder die Anzahl der Taschen auf der zweiten Stirnseite gleich sind.

Auch hat es sich als vorteilhaft erwiesen, wenn die wenigstens eine Lasche auf der ersten Stirnseite oder der zweiten Stirnseite und die wenigstens eine Lasche auf der jeweils anderen Stirnseite in Richtung der Drehachse in der Umlaufrichtung fluchtend zueinander sind. Die Position der jeweiligen Lasche ist auf ihren Mittelpunkt in der Umlaufrichtung bezogen, wobei bevorzugt die Laschen auf der ersten Stirnseite und/oder die Laschen auf der zweiten Stirnseite identisch ausgebildet sind.

Eine vorteilhafte Weiterbildung der Erfindung sieht vor, dass die wenigstens eine Tasche auf der ersten Stirnseite und/oder der zweiten Stirnseite in Umlaufrichtung fluchtend zu der wenigstens eine Lasche auf der jeweils anderen Stirnseite angeordnet ist. Durch diese Maßnahme lässt sich der Längsschwund beim Aushärten des Kunststoffes nach dem Spritzgießen besser ausgleichen, wodurch etwaige Eigenspannungen abgeschwächt werden können. Auch wird durch diese Maßnahme die Kunststoff-Wandstärke reduziert und eine Lunkerbildung vermindert.

Die wenigstens eine Tasche ist vorteilhafter Weise in der Umlaufrichtung in einem Freibereich zwischen zwei in Umlaufrichtung benachbarten und freistehenden Laschen angeordnet, wobei die Tasche gemäß einer bevorzugten Ausgestaltung in Umlaufrichtung mittig in dem Freibereich angeordnet ist. Die Tasche kann sich entweder über den gesamten Freibereich erstrecken oder nur anteilig über den Freibereich, wobei bevorzugt die Tasche sich in der Umlaufrichtung um die Drehachse in einem Bogenmaß erstreckt, welches gleich groß bemessen ist wie ein Bogenmaß der wenigstens einen freistehenden Lasche.

Darüber hinaus hat es sich als vorteilhaft erwiesen, wenn mindestens eine Bindenaht in dem Außenteil ausgebildet ist, und wenn die mindestens eine Lasche in der Umlaufrichtung beabstandet zu der mindestens einen Bindenaht angeordnet ist. Die mindestens eine Bindenaht entsteht technisch bedingt im Herstellungsprozess und führt zu einer potentiellen Schwachstelle in dem Außenteil. Da bei der späteren Verwendung des erfindungsgemäßen Mehrkomponentenrades insbesondere hohe Spannungsspitzen in dem Randbereich der mindestens einen Lasche zu erwarten sind, ist es da zweckmäßig, die mindestens eine Lasche derart anzuordnen, dass diese zwischen der mindestens einen Bindenaht und dem mindestens einen Anspritzabschnitt angeordnet ist.

Eine besonders bevorzugte Ausgestaltung der vorliegenden Erfindung sieht vor, dass das Innenteil eine Welle, ein Wälzlager oder ein Gleitlager bildet, wobei bevorzugt das Wälzlager als Kugellager ausgebildet ist. Das Wälzlager weist einen Innenring und einen Außenring auf, wobei das Außenteil auf den Außenring des Wälzlagers form- und/oder materialschlüssig durch ein Umspritzen aufgebracht ist. Das Inntenteil bzw. das Wälzlager bildet somit ein Einlegeteil.

Unter der Maßgabe, dass das Innenteil ein Wälzlager ist, werden beim Umspritzen des Innenteils zur Ausbildung des Außenteils die erste Stirnseite und die zweite Stirnseite des Innenteils derart abgedeckt, dass beim Spritzgießen die Wälzkörper des Wälzlagers nicht umspritzt werden. In dieser Ausführung muss die Welle-Nabe-Verbindung zwischen dem Innenteil und dem Außenteil kein bzw. kein nennenswertes Drehmoment übertragen.

Die äußere Mantelfläche des Innenteils kann eine gedrehte und/oder geschliffene kreiszylindrische Mantelfläche sein und kann einen Mittenrauwert Ra von kleiner Ra = 32 µm, bevorzugt kleiner als Ra = 16 µm, aufweisen.

Weiterhin hat es sich als vorteilhaft erwiesen, wenn die wenigstens eine Lasche des Außenteils die erste Stirnseite oder die zweite Stirnseite um wenigstens 0,5mm überragt. Bevorzugt ragt die wenigstens eine Lasche nicht mehr als 50% über die jeweilige Stirnseite des Innenteils bzw. nicht über den Außenring des Innenteils.

Ein weiterer Aspekt der vorliegenden Erfindung betrifft ein Zahnrad, insbesondere ein Planetenrad, wobei das Zahnrad eine Drehachse, eine erste Stirnseite und eine zweite Stirnseite aufweist. Darüber hinaus weist das Zahnrad ein Innenteil und ein aus einem Kunststoff mit wenigstens einem Anspritzabschnitt ausgebildetes Außenteil auf, wobei das Außenteil auf einer äußeren Mantelfläche des Innenteils form- und/oder materialschlüssig an dem Innenteil angeordnet ist. Erfindungsgemäß ist vorgesehen, dass das Außenteil auf der ersten Stirnseite und/oder der zweiten Stirnseite wenigstens eine in Umlaufrichtung um die Drehachse freistehende Lasche aufweist, die über die jeweilige Stirnseite des Innenteils ragt, wodurch das Au-ßenteil auf dem Innenteil in zumindest eine Richtung der Drehachse auf dem Außenteil festgelegt ist.

Eine bevorzugte Weiterbildung des erfindungsgemäßen Zahnrades sieht vor, dass das Innenteil eine Welle, ein Wälzlager oder ein Gleitlager bildet, wobei bevorzugt das Innenteil als Kugellager mit einem Innenring und einem Außenring ausgebildet ist. Unter der Maßgabe, dass das Innenteil ein Kugellager ist, muss die Welle-Nabe Verbindung zwischen dem Innenteil und dem Außenteil kein bzw. kein nennenswertes Drehmoment übertragen.

Ein dritter Aspekt der vorliegenden Erfindung betrifft ein Planetengetriebe, aufweisend wenigstens ein erfindungsgemäßes Zahnrad, insbesondere ein Planetenrad.

Nachfolgend werden unter Bezugnahme auf die begleitenden Zeichnungen sieben Ausführungsbeispiele eines erfindungsgemä-ßen Mehrkomponentenrads beschrieben. Es zeigen:
- Figur 1: eine perspektivische Darstellung eines Planetenträgers eines Planetengetriebes mit vier als Mehrkomponentenrad ausgebildeten Planetenrädern,
- Figur 2: eine Vorderansicht eines Mehrkomponentenrads gemäß Figur 1,
- Figur 3: eine Schnittdarstellung des Mehrkomponentenrads gemäß der Schnittlinie B-B in Figur 2,
- Figur 4: eine Detaildarstellung der Schnittdarstellung gemäß Figur 3,
- Figur 5: eine Vorderansicht eines zweiten Ausführungsbeispiels eines Mehrkomponentenrads,
- Figur 6: eine Schnittdarstellung des Mehrkomponentenrads gemäß der Schnittlinie A-A in Figur 5,
- Figur 7: eine Vorderansicht eines dritten Ausführungsbeispiels des Mehrkomponentenrads,
- Figur 8: eine Schnittdarstellung des Mehrkomponentenrads gemäß der Schnittlinie C-C in Figur 7,
- Figur 9: eine perspektivische Ansicht eines vierten Ausführungsbeispiels des Außenteils des Mehrkomponentenrades gemäß Figur 1,
- Figur 10: eine Frontansicht des Außenteils gemäß Figur 9,
- Figur 11: eine Schnittdarstellung gemäß der Schnittlinie A-A gemäß Figur 10,
- Figur 12: eine Schnittdarstellung gemäß der Schnittlinie B-B gemäß Figur 10,
- Figur 13: eine Schnittdarstellung gemäß der Schnittlinie C-C gemäß Figur 10,
- Figur 14: eine Schnittdarstellung gemäß der Schnittlinie D-D gemäß Figur 10,
- Figur 15: eine perspektivische Ansicht eines fünften Ausführungsbeispiels des Außenteils des Mehrkomponentenrades gemäß Figur 1,
- Figur 16: eine Frontansicht des Außenteils gemäß Figur 15,
- Figur 17: eine Schnittdarstellung gemäß der Schnittlinie C-C gemäß Figur 16,
- Figur 18: eine Schnittdarstellung gemäß der Schnittlinie D-D gemäß Figur 16,
- Figur 19: eine Schnittdarstellung gemäß der Schnittlinie E-E gemäß Figur 16,
- Figur 20: eine perspektivische Darstellung eines sechsten Ausführungsbeispiels, wobei die Lasche eine Aussparung aufweist,
- Figur 21: eine Detaildarstellunge der Lasche gemäß Figur 20,
- Figur 22: eine perspektivische Darstellung eines siebten Ausführungsbeispiels, und
- Figur 23: eine Detaildarstellungen gemäß Figur 22.

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleiche Teile mit einer Bezugsziffer versehen.

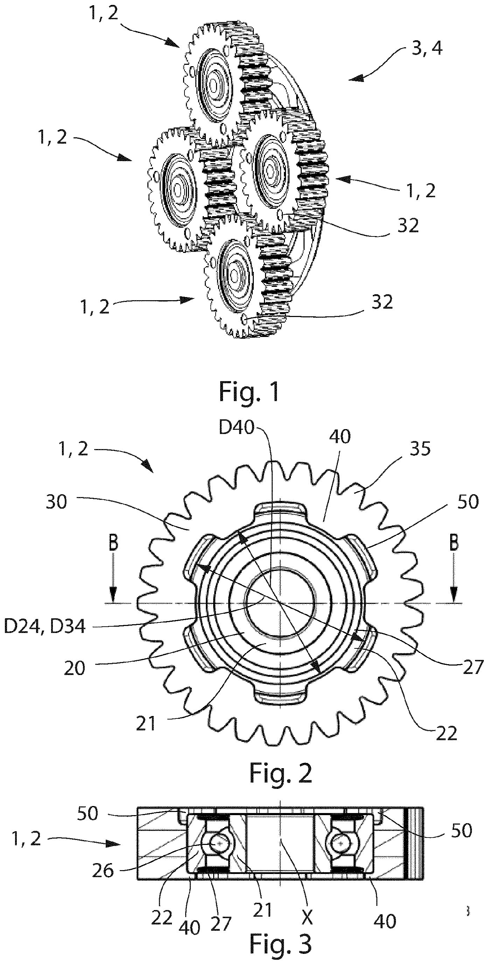

Figur 1 zeigt einen Planetenträger 4 eines nicht vollständig dargestellten Planetengetriebes 3, aufweisend vier Mehrkomponentenräder 1, welche als Planetenräder 2 mit einem Zahnkranz 35 ausgebildet sind.

Ein erstes Ausführungsbeispiel des Mehrkomponentenrads 1 ist in den Figuren 2 bis 4 dargestellt und es ist ersichtlich, dass das Mehrkomponentenrad 1 ein Innenteil 20 und ein Außenteil 30 umfasst. Das Mehrkomponentenrad 1 weist eine Drehachse X auf, die näherungsweise eine Symmetrieachse des Mehrkomponentenrads 1 bildet und zu der das Innenteil 20 und das Außenteil 30 koaxial angeordnet sind.

Das Mehrkomponentenrad 1 kann zylinderförmig oder hohlzylindrisch ausgebildet sein und kann weiterhin eine Nabe auf einer inneren Mantelfläche 13 bilden. Das Mehrkomponentenrad 1 weist eine erste Stirnseite 11 und eine zweite Stirnseite 12 auf, die in der Drehachse X parallel und beanstandet auf zwei diametralen Seiten angeordnet sind.

Das Innenteil 20 ist kreisringförmig mit einer Breite B₂ und kann aus einem beliebigen Werkstoff hergestellt sein. In dem dargestellten Ausführungsbeispiel ist das Innenteil 20 ein herkömmliches Kugellager mit einem Innenring 21, einem Außenring 22, mehreren Wälzkörpern 26 und zwei Dichtscheiben 27. Das Innenteil 20 hat einen Innendurchmesser D₁₃, in welchem eine innere Mantelfläche 13 liegt und einen Außendurchmesser D₂₄, auf dem eine äußere Mantelfläche 24 als Zylindermantelfläche angeordnet ist. Die äußere Mantelfläche 24 ist bevorzugt eine gedrehte oder geschliffene Oberfläche und weist bevorzugt einen mittleren Mittenrauwert Ra ≤ 32 µm auf.

Das Außenteil 30 wird bevorzugt auf das Innenteil 20 in einem Spritzgussverfahren aufgespritzt, wobei das Innenteil 20 als ein Einlegeteil umspritzt wird. Das Außenteil 30 weist somit verfahrensbedingt wenigstens einen Anspritzabschnitt 32 auf, der bevorzugt auf wenigstens einer der Stirnseiten 11, 12 ausgebildet ist. Das Außenteil 30 ist bevorzugt aus einem Kunststoff hergestellt und wird beim Umspritzen sowohl auf der äu-ßeren Mantelfläche 24 des Innenteils 20 als auch - wie nachfolgend noch erläutert wird - auf den Stirnseiten 11, 12 angeordnet.

Das Außenteil 30 ist im Wesentlichen ringförmig mit einer Breite B3 und ist koaxial zu dem Innenteil 20 ausgerichtet. Das Außenteil 30 des Mehrkomponentenrads 1 kann - wie in den Ausführungsbeispielen gemäß den Figuren 1 bis 8 dargestellt ist - den Zahnkranz 35 mit einer beliebigen Zahnform aufweisen. Die Breite B3 des Außenteils 30 ist größer als die Breite B2 des Innenteils 20.

Auf der ersten Stirnseite 11 und auf der zweiten Stirnseite 12 weist das Außenteil 30 jeweils sechs in eine Umlaufrichtung um die Drehachse X freistehende Laschen 40 auf, welche in Richtung der Drehachse X radial nach innen abstehen und bereichsweise auf die Stirnseiten des Innenteils 20 zur Bildung einer Axialsicherung ragen.

Die Laschen 40 werden zusammen mit dem Außenteil 30 beim Spritzgießen gebildet, wodurch die Laschen 40 und das Außenteil 30 aus einem einzigen Stück gebildet sind.

Gemäß einer nicht dargestellten Weiterbildung kann die Breite B3 des Außenteils 30 auch kleiner oder größer als die Breite B2 des Innenteils 20 oder auch gleich bemessen sein. In dieser Weiterbildung können die Laschen 40 in Richtung der Drehachse X die erste Stirnseite 11 und/oder die zweite Stirnseite 12 überragen.

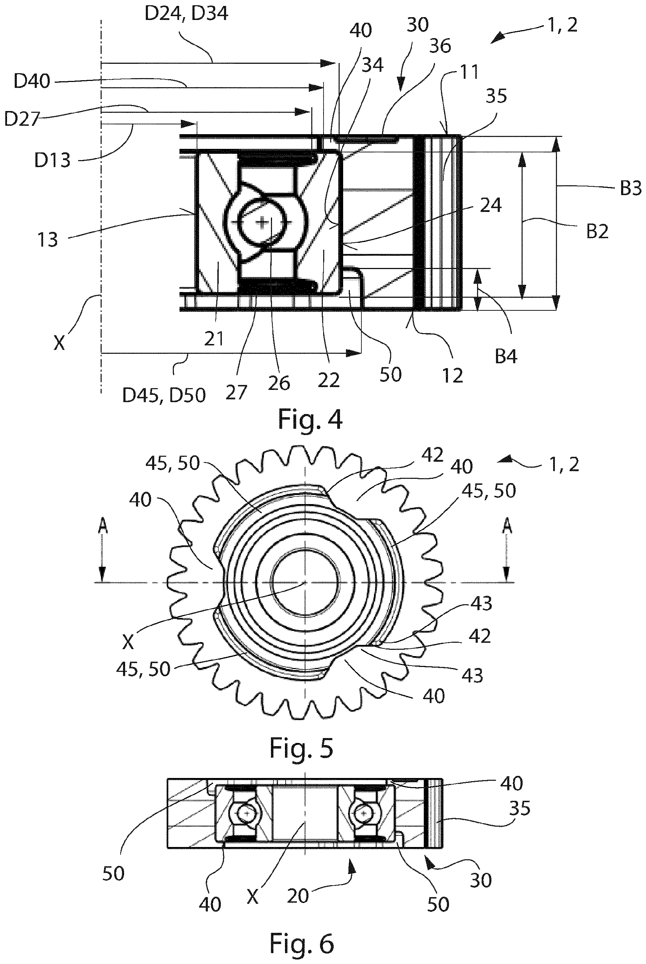

Wie insbesondere der Figur 4 zu entnehmen ist, stehen die Laschen 40 ausgehend von dem Innendurchmesser D₃₄ des Außenteils 30 bzw. dem Außendurchmesser D₂₄ des Innenteils 20 radial nach innen ab. Weiterhin ist den Figuren 3 und 4 zu entnehmen, dass die Laschen 40 auf der ersten Stirnseite 11 und der zweiten Stirnseite 12 in Flucht mit den Stirnflächen des Außenteils 30 liegen. Die Laschen 40 liegen auf der jeweiligen Stirnfläche 11, 12 des Innenteils 20 an.

In radialer Richtung endet die jeweilige Lasche 40 in einem Durchmesser D₄₀, welcher kleiner ist als der Außendurchmesser D₂₄ des Innenteils 20 und größer ist als der Innendurchmesser D₁₃ des Innenteils. Bevorzugt ist der Durchmesser D₄₀ wenigstens 1 mm kleiner als der Außendurchmesser D₂₄ des Innenteils 20.

Weiterhin ist der Figur 4 zu entnehmen, dass der Durchmesser D₄₀ derart gewählt ist, dass die Laschen 40 nicht bis zu der Dichtscheibe 27 reichen, um zu verhindern, dass während des Herstellungsprozesses Kunststoff in den Wälzlagerkäfig eindringt. Entsprechend ist der Durchmesser D₄₀ wenigstens so groß wie ein Außendurchmesser D₂₇ der Dichtscheibe 27, wobei bevorzugt der Durchmesser D₄₀ durch ein Aufmaß von etwa 1 mm oder größer gewählt ist als der Außendurchmesser D₂₇ der Dichtscheibe 27, um geeignete Abdichtungsmaßnahmen für den Wälzkörper beim Spritzgießen zu ermöglichen.

Zwischen den Laschen 40 auf der ersten Stirnseite 11 und der zweiten Stirnseite 12 ist jeweils ein Freibereich 45 ausgebildet, durch den die freistehenden Laschen 40 in der Umlaufrichtung um die Drehachse X unterbrochen sind. Der Freibereich 45 erstreckt sich in der Umlaufrichtung mit einem Durchmesser D₄₅, der wenigstens so groß ist wie der Außendurchmesser D₂₄ der äu-ßeren Mantelfläche 24 des Innenteils 20, also D₄₅ ≥ D₂₄. In Umlaufrichtung ist zwischen dem Freibereich 45 und der Lasche 40 ein Übergangsbereich 42 ausgebildet, der durch mehrere Übergangsradien 43 zur Vermeidung von scharfkantigen Übergängen ausgebildet ist.

Die Laschen 40 erstrecken sich in der Umlaufrichtung über ein Bogenmaß von bevorzugt ca. 30°, wobei das Bogenmaß beliebig gewählt werden kann.

Den Schnittdarstellungen gemäß den Figuren 3 und 4 ist weiterhin zu entnehmen, dass das Außenteil 30 mehrere Taschen 50 aufweist, die in der Umlaufrichtung sowohl auf der ersten Stirnseite 11 als auch auf der zweiten Stirnseite 12 zwischen den Laschen 40 angeordnet sind.

Die Taschen 50 erstrecken sich bereichsweise sowohl über die jeweilige Stirnseite 11, 12 als auch über die innere Mantelfläche 34 des Außenteils 30. Hierzu erstrecken sich die Taschen 50 von der Drehachse X radial nach außen bis zu einem Durchmesser D₅₀, welcher größer ist als der Innendurchmesser D₃₄ des Innenteils 20. Die jeweilige Tasche 50 verbindet die jeweils eine Stirnseite 11, 12 mit der inneren Mantelfläche 34. Darüber hinaus kann der Figur 4 entnommen werden, dass die Taschen 50 die äußere Mantelfläche 24 des Innenteils 20 bereichsweise freilegen, wodurch in der Umlaufrichtung die Kunststoff-Wandstärke des Außenteils 30 reduziert ist und somit einer möglichen Lunkerbildung entgegengewirkt wird.

Bezogen auf die Breite B2 (siehe Fig. 4) legen die Taschen 50 wenigstens 1mm der äußeren Mantelfläche 24 des Innenteils 20 frei, wobei bevorzugt die Taschen 50 die äußere Mantelfläche 24 des Innenteils 20 um eine Breite B4 freilegen, welche sich wie folgt bestimmt: B4 ≈ (B3 - B2)/2. Maximal sollte jedoch die Breite B4 der jeweiligen Tasche 50 parallel zu der Drehachse X gemessen nicht mehr als 0,4 * B2, also 40% der Breite B2, betragen.

Die Tasche 50 kann - wie im dargestellten Ausführungsbeispiel gezeigt ist - sich in der Umlaufrichtung über den gesamten Freibereich 45 erstrecken. Der Durchmesser D50 der Tasche 50 und der Durchmesser D45 des Freibereiches können ebenfalls gleich bemessen sein.

Wie ferner den Figuren 3 und 4 zu entnehmen ist, sind die Laschen 40 und die Taschen 50 auf der ersten Stirnseite 11 und der zweiten Stirnseite 12 derart zueinander versetzt angeordnet, dass in Richtung der Drehachse X die Laschen 40 auf der ersten Stirnseite 11 fluchtend zu den Taschen 50 auf der zweiten Stirnseite 12 (jeweils bezogen auf ihren Mittelpunkt in der Umlaufrichtung) und vice versa angeordnet sind. Durch diese in Umlaufrichtung versetzte Anordnung der Laschen 40 und Taschen 50 kann ein Längenschwund reduziert werden, wodurch etwaige Eigenspannungen in dem Außenteil 30 reduziert werden können.

Ein zweites Ausführungsbeispiel ist in den Figuren 5 und 6 dargestellt, wobei der Unterschied zwischen dem ersten Ausführungsbeispiel und dem zweiten Ausführungsbeispiel darin liegt, dass eine unterschiedliche Anzahl von Laschen 40 vorgesehen ist.

Figur 5 zeigt, dass auf der ersten Stirnseite 11, aber ebenso auf der zweiten Stirnseite 12, in Umlaufrichtung drei freistehende Laschen 40 angeordnet sind. Die drei freistehenden Lasche 40 erstrecken sich in der Umlaufrichtung über ein Bogenmaß von ca. 30° und sind symmetrisch in einer Winkelteilung von 120° angeordnet. Der Freibereich 45 zwischen den Laschen 40 wird vollständig von den Taschen 50 eingenommen, wodurch sich die Taschen 50 in der Umlaufrichtung über ein Bogenmaß von ca. 60° um die Drehachse X erstrecken.

Wie insbesondere der Figur 6 zu entnehmen ist, sind analog zu dem ersten Ausführungsbeispiel die Laschen 40 auf der ersten Stirnseite 11 und die Taschen 50 auf der zweiten Stirnseite 12 und vice versa (jeweils bezogen auf den Mittelpunkt in der Umlaufrichtung) in Richtung der Drehachse X fluchtend zueinander angeordnet. Die oben genannten Bogenmaße für die Laschen 40 und den Freibereich 45 können nach Belieben variiert werden.

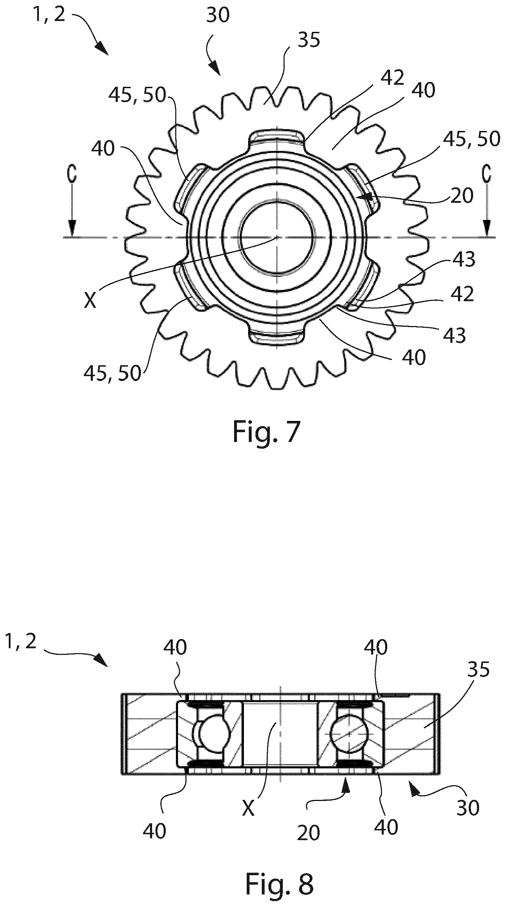

Das in den Figuren 7 und 8 wiedergegebene Ausführungsbeispiel unterscheidet sich von den zuvor vorgestellten Ausführungsbeispielen dahingehend, dass die Laschen 40 auf der ersten Stirnseite und die Laschen 40 auf der zweiten Stirnseite 12 (bezogen auf den Mittelpunkt in der Umlaufrichtung) fluchtend zueinander angeordnet sind.

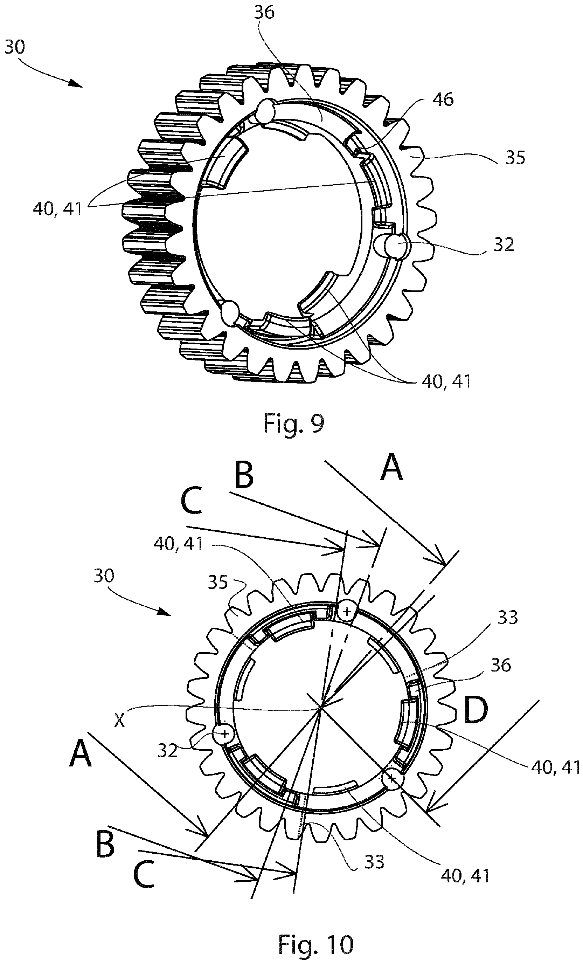

Das vierte Ausführungsbeispiel ist den Figuren 9-14 zu entnehmen. Das Außenteil 30 wird aus einem Kunststoff, vorzugsweise durch Spritzgießen, hergestellt und kann - wie dargestellt - in der Umlaufrichtung symmetrisch um die Drehachse X verteilt drei Anspritzabschnitte 32 aufweisen. Während des Herstellungsprozesses wird in eine entsprechende (nicht dargestellte) Kavität eines (nicht dargestellten) Werkzeugs verflüssigter Kunststoff eingebracht, wobei die Anspritzabschnitte 32 dort ausgebildet sind, wo der Kunststoff in die Kavität des Werkzeugs eingespritzt wird. Der verflüssigte Kunststoff verteilt sich in der Kavität, wobei in der Umlaufrichtung näherungsweise zwischen den Anspritzabschnitten 32 die Fließfronten aufeinandertreffen und eine sogenannte Bindenaht 33 gebildet ist, in der die Fließfronten verschweißt werden. Die Lage der Anspritzabschnitte 32 sowie der Bindenaht 33 sind in der Figur 10 ersichtlich, wobei zum besseren Verständnis die Bindenähte 33 mittels einer strichpunktierten Linie dargestellt sind.

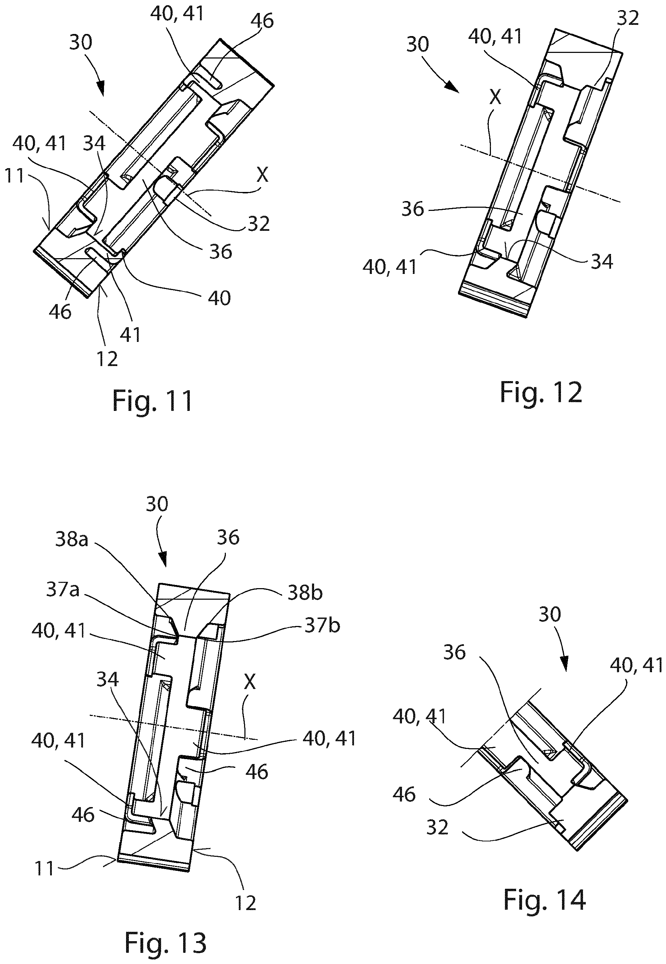

Das Außenteil 30 weist einen von der ersten Stirnseite 11 und der zweiten Stirnseite 12 zurückversetzten Flansch 36 auf, dessen freies Ende auf die Drehachse X zeigt. Insbesondere der Figur 13 ist zu entnehmen, dass sich der zurückversetzte Flansch 36 auf der der ersten Stirnseite 11 zugewandten Seite von einer ersten Außenkante 38a zu einer ersten Innenkante 37a erstreckt und auf der der zweiten Stirnseite 12 zugewandten Seite von einer zweiten Außenkante 38b zu einer zweiten Innenkante 37b. Der Abstand zwischen der ersten Außenkante 38a und der zweiten Außenkante 38b ist größer als der Abstand zwischen der ersten Innenkante 37a und der zweiten Innenkante 37b.

Der zurückversetzte Flansch 36 kann eine sich verjüngende Form aufweisen, wobei mit abnehmenden Radius - bezogen auf die Drehachse X - der zurückversetzte Flansch 36 zunehmend verjüngt ausgebildet sein kann. Die sich verjüngende Form des Flansches kann in Figur 13 abgelesen werden. Das freie Ende des zurückversetzten Flansches 36 bildet die innere Mantelfläche 34, welche in Kontakt mit dem Innenteil 20 stehen kann.

Von dem zurückversetzten Flansch 36 stehen mehrere L-förmige Zungen 41 ab, die einen ersten Teilabschnitt und einen zweiten Teilabschnitt aufweisen. Der erste Teilabschnitt ist näherungsweise parallel zu der Drehachse X angeordnet, währenddessen der zweite Teilabschnitt senkrecht zu dem ersten Abschnitt abgewinkelt ist und eine Lasche 40 bildet, die eingerichtet ist, über die jeweilige Stirnseite 11, 12 des Innenteils 20 zu ragen. Wie insbesondere den Figuren 10 und 11 zu entnehmen ist, sind auf jeder Stirnseite 11, 12 drei L-förmige Zungen 41 angeordnet, die in Umlaufrichtung äquidistant beabstandet sind und jeweils bevorzugt eine einzige Lasche 40 bilden. Die jeweilige L-förmige Zunge 41 kann derart angeordnet sein, dass diese zwischen einem Anspritzabschnitt 32 und einer zu dem Anspritzabschnitt 32 beabstandeten Bindenaht 33 angeordnet ist, vorzugsweise mittig.

Wie weiterhin der Figur 10 zu entnehmen ist, ist um die jeweilige L-förmige Zunge 41 eine U-förmige Ausnehmung 46 in dem zurückversetzten Flansch 36 ausgebildet, durch die die effektive Länge des ersten Teilabschnitts der L-förmigen Zunge 41 verlängert wird und die es ermöglicht, dass die L-förmige Zunge 41 bzw. dass die Lasche 40 bildende freie Ende biegeelastisch ausgelenkt werden kann.

Die Ausnehmung 46 erstreckt sich, wie in den Figuren 11 und 13 gezeigt ist, von der jeweiligen Außenkante 38a, 38b des zurückversetzten Flansches 36 parallel zu der Drehachse X und endet fluchtend zu der Innenkante 37a, 37b des zurückversetzten Flansches 36.

Der Schnitt D-D gemäß Figur 10, dargestellt in Figur 14, zeigt einen Schnitt durch den Anspritzabschnitt 32 und es ist ersichtlich, dass dieser in der bevorzugten Ausgestaltung bezogen auf die Stirnseite 11 zurückversetzt ist, jedoch in Richtung der Drehachse X den zurückversetzten Flansch 36 überragt.

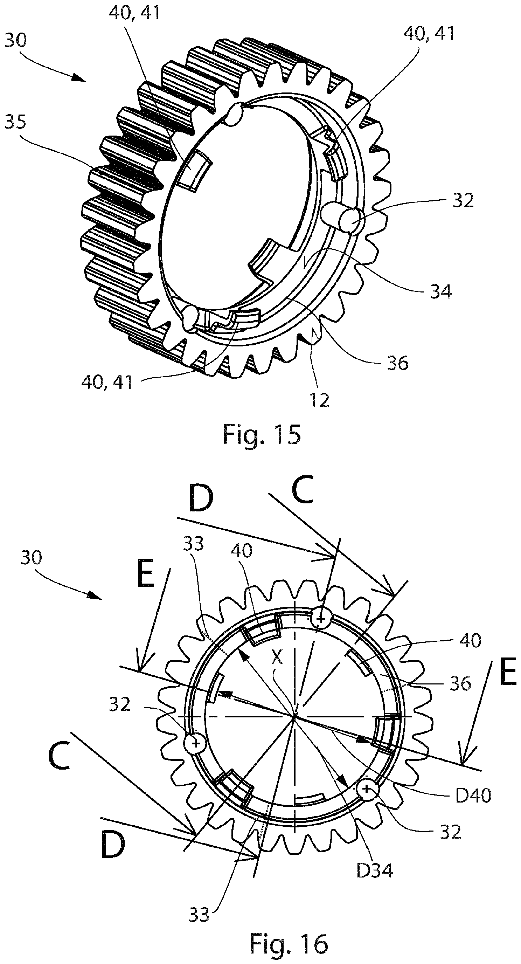

Die Figuren 15-19 zeigen ein Außenteils 30 gemäß eines fünften Ausführungsbeispiels. Das Außenteil 30 unterscheidet sich von dem Ausführungsbeispiel gemäß den Figuren 9-14 in der Ausgestaltung des zurückversetzten Flansches 36 sowie der Verbindung zwischen den L-förmigen Zungen 41 und dem zurückversetzten Flansch 36.

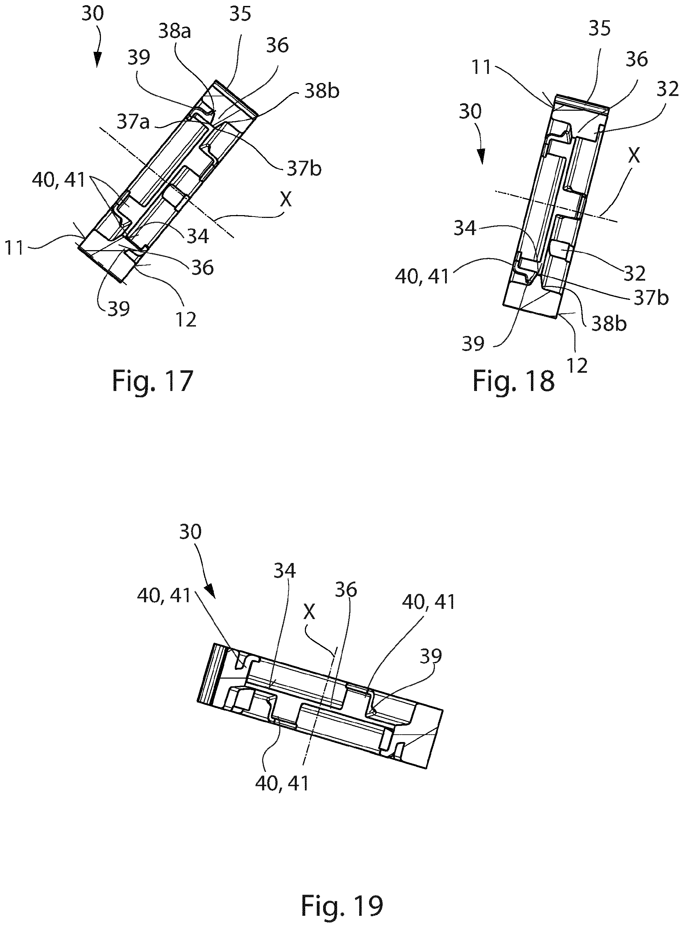

Der zurückversetzte Flansch 36 kann eine sich verjüngende Form aufweisen bzw. trapezförmig ausgebildet sein, wobei mit abnehmendem Radius - bezogen auf die Drehachse X - der zurückversetzte Flansch 36 zunehmend verjüngt ausgebildet sein kann. Die sich verjüngende Form des Flansches kann in Figur 17 abgelesen werden.

Alternativ kann der zurückversetzte Flansch 36 quaderförmig sein, wodurch ein Abstand wischen den jeweiligen Außenkanten 38a, 38b und den jeweiligen Innenkanten 37a, 37b des zurückversetzten Flansches 36 äquidistant ist.

Wie insbesondere den Figuren 16 und 17 zu entnehmen ist, ist die L-förmige Zunge 41 mit dem zurückversetzten Flansch 36 über einen Ansatz 39 verbunden. Die L-förmige Zunge 41 kann durch einen Übergang zwischen der L-förmigen Zunge 41 und dem zurückversetzten Flansch 36 gebildet werden, der beispielsweise keilförmig ausgebildet sein kann. Der Ansatz 39 ist dabei an die Form des zurückversetzten Flansches 36 angepasst, wodurch parallel zu der Drehachse X eine Wandstärke des Ansatzes und des Flansches (zusammen) näherungsweise konstant bleibt und somit größere Spannungen in dem Übergang zwischen der L-förmigen Zunge 41 und dem umlaufenden und zurückversetzten Flansch 36 reduziert werden können.

Im Übrigen ist ebenfalls ersichtlich, dass sowohl auf der ersten Stirnseite 11 als auf der zweiten Stirnseite 12 jeweils 3 L-förmige Zungen 41 ausgebildet sind, die jeweils eine Lasche 40 bilden. Die Anordnung der L-förmigen Zungen 41 bzw. der Laschen 40 kann vorzugsweise derart gewählt werden, dass die L-förmigen Zungen 41 bzw. die Laschen 40 - wie dargestellt - sowohl winkelversetzt auf gegenüberliegenden Stirnseiten 11, 12 als auch winkelversetzt zu den Anspritzabschnitten 32 und den Bindenähten 33 angeordnet werden können.

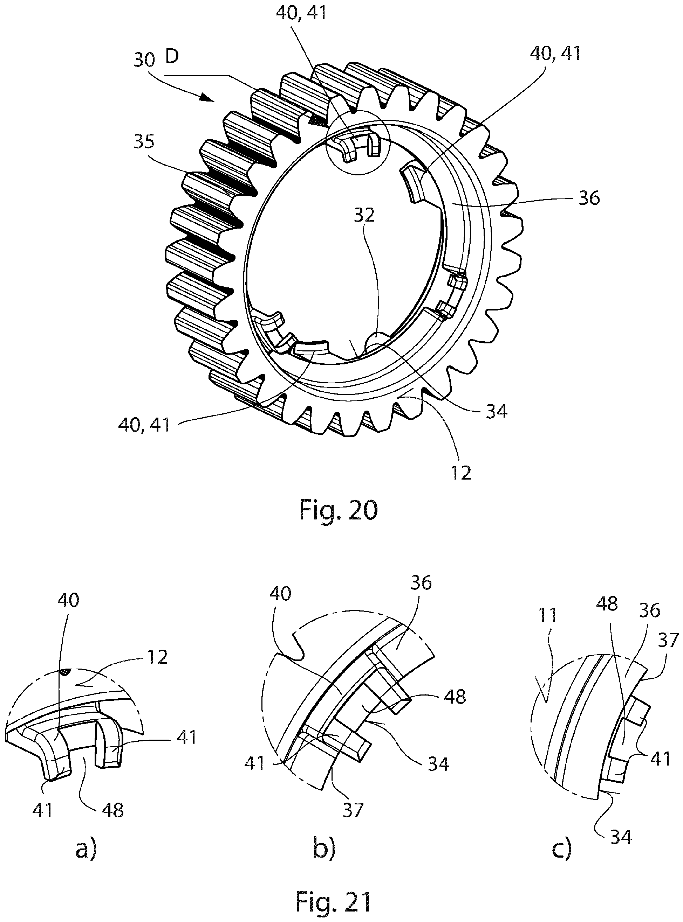

Figuren 20 bis 21c zeigen ein fünftes Ausführungsbeispiel, wobei das Mehrkomponentenrad näherungsweise analog zu dem in den Figuren 15-19 dargestellten Ausführungsbeispiel ausgebildet ist. Im Gegensatz zu den bisher dargestellten Ausführungsbeispiel weist die Lasche 40 eine Aussparung 48 auf, welche wie dargestellt die Lasche mittig derart durchbrechen kann, dass der zweite Teilbereich der Lasche 40 mehrzüngig ausgebildet ist.

Von dem zurückgesetzten Flansch 36 steht die jeweilige Lasche 40 bzw. L-förmige Zunge 41 in Axialrichtung ab und überragt die jeweilige Stirnseite 11, 12. Der in der Axialrichtung ausgerichtete Teil der Lasche 40 entspricht dem ersten Teilbereich, währenddessen der zweite Teilbereich näherungsweise radial bzw. bzw. sekantial ausgerichtet ist und die Stirnseiten des Innenteils 20 umgreifen kann. Hierzu überragen die Laschen 40 die Mantelfläche 34, siehe Figuren 21b und 21c.

Figuren 20 und 21 zeigen ein sechstes Ausführungsbeispiel, wobei das Mehrkomponentenrad näherungsweise analog zu dem in den Figuren 15-19 dargestellten Ausführungsbeispiel ausgebildet ist. Im Gegensatz zu den bisher dargestellten Ausführungsbeispielen weist die Lasche 40 eine Aussparung 48 auf, welche wie dargestellt die Lasche mittig derart durchbrechen kann, dass der zweite Teilbereich der Lasche 40 mehrzüngig ausgebildet ist.

Von dem zurückgesetzten Flansch 36 steht die jeweilige Lasche 40 bzw. L-förmige Zunge 41 in Axialrichtung ab und überragt die jeweilige Stirnseite 11, 12. Der in der Axialrichtung ausgerichtete Teil der Lasche 40 entspricht dem ersten Teilbereich, währenddessen der zweite Teilbereich näherungsweise radial bzw. bzw. sekantial ausgerichtet ist und die Stirnseiten des Innenteils 20 umgreifen kann.

Durch die Aussparung 48 wird die axiale Verformbarkeit der Laschen 40 erhöht und zugleich die axialen Schwundspannungen reduziert. An dieser Stelle wird angemerkt, dass die jeweilige Lasche 40 eine Mehrzahl von Aussparungen 48 aufweisen kann, wodurch die Lasche 40 eine Vielzahl von Zungen 41 aufweisen kann.

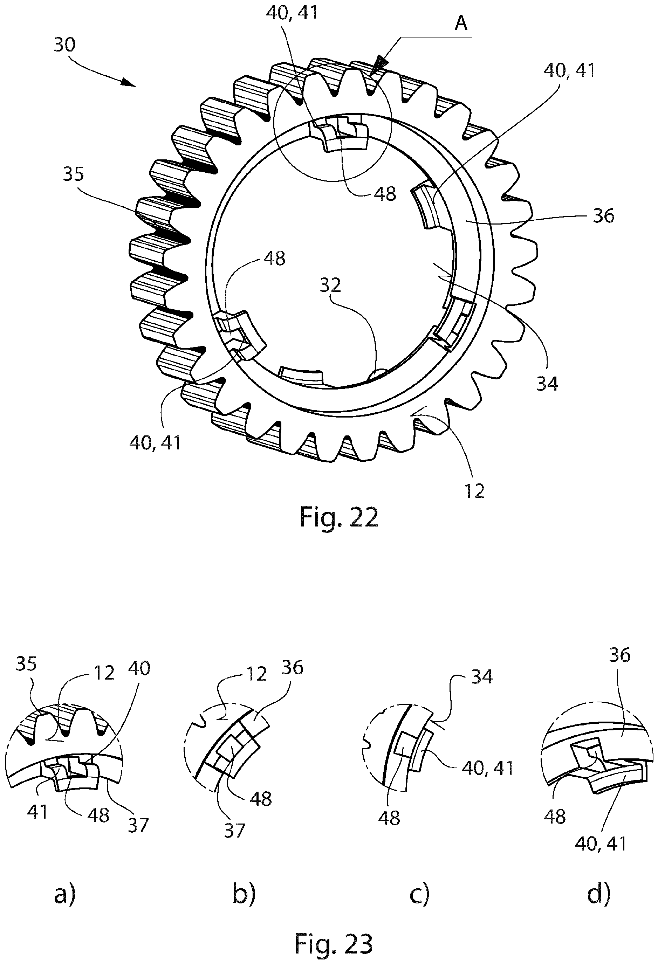

Unter Bezugnahme auf die Figuren 22 bis 23c ist ein siebtes Ausführungsbeispiel dargestellt, wobei die Aussparung 48 sowohl die Lasche 40 als auch den zurückgesetzten Flansch 36 durchbricht. Die Lasche 40 ist in diesem Ausführungsbeispiel U-förmig, wobei der erste Teilbereich zwei oder mehrteilig ausgebildet ist und der zweite Teilbereich die Enden des ersten Teilbereiches verbindet. Die Aussparung 48 erstreckt sich in dem dargestellten Ausführungsbeispiel quaderförmig parallel zu der Längsachse durch die Lasche 40 und durch den zurückgesetzten Flansch 36, wodurch ein Hinterschnitt in dem zweiten Teil vermieden ist und die Verformbarkeit im Bereich der Lasche 40 erhöht bzw. die Steifigkeit dort reduziert wird.

### Bezugszeichenliste

- 1: Mehrkomponentenrad
- 2: Planetenrad
- 2: Zahnrad
- 3: Planetengetriebe
- 4: Planetenträger
- 11: erste Stirnseite
- 12: zweite Stirnseite
- 13: Mantelfläche
- 20: Innenteil
- 21: Innenring
- 22: Außenring
- 24: Mantelfläche
- 26: Wälzkörper
- 27: Dichtscheibe
- 30: Außenteil
- 32: Anspritzabschnitt
- 33: Bindenaht
- 34: Mantelfläche
- 35: Zahnkranz
- 36: Flansch
- 37: Innenkante
- 38: Außenkante
- 39: Ansatz
- 40: Lasche
- 41: Zunge
- 42: Übergangsbereich
- 43: Übergangsradius
- 45: Freibereich
- 48: Aussparung
- 50: Tasche
- B2: Breite von 20
- B3: Breite von 30
- B4: Breite von 40

- D13: Innendurchmesser von 13
- D24: Außendurchmesser von 24
- D27: Außendurchmesser von 27
- D34: Innendurchmesser von 34
- D40: Durchmesser von 40
- D45: Innendurchmesser von 45
- D50: Durchmesser von 50
- X: Drehachse

## Patentansprüche

1. Mehrkomponentenrad (1) mit einer Drehachse (X) und einer ersten Stirnseite (11) und einer zweiten Stirnseite (12), aufweisend:
- ein Innenteil (20), und
- ein Außenteil (30)
- wobei das Außenteil (30) auf einer äußeren Mantelfläche (24) des Innenteils (20) form- und/oder materialschlüssig an dem Innenteil (20) angeordnet ist,
- wobei das Außenteil auf der ersten und/oder der zweiten Stirnseite wenigstens eine in Umlaufrichtung um die Drehachse freistehende Lasche (40) aufweist,
**dadurch gekennzeichnet, dass**
das Außenteil (30) aus einem Kunststoff mit wenigstens einem Anspritzabschnitt (32) ist, und dass
die freistehende Lasche (40) ausgehend von einer inneren Mantelfläche (34) des Außenteils (30) in Richtung der Drehachse (X) absteht und zumindest abschnittsweise auf die jeweilige Stirnseite (11, 12) des Innenteils (20) ragt.

2. Mehrkomponentenrad (1) nach Anspruch 1,
**dadurch gekennzeichnet, dass**
das Außenteil (30) einen Zahnkranz (35) aufweist.

3. Mehrkomponentenrad (1) nach einem der vorgenannten Ansprüche,
**dadurch gekennzeichnet, dass**
die Laschen (40) umfangssymmetrisch angeordnet sind.

4. Mehrkomponentenrad (1) nach einem der vorgenannten Ansprüche,
**dadurch gekennzeichnet, dass**
die Anzahl der Laschen (40) auf der ersten und der zweiten Stirnseite (11, 12) gleich ist.

5. Mehrkomponentenrad (1) nach einem der vorgenannten Ansprüche,
**dadurch gekennzeichnet, dass**
die Laschen (40) von einem von der ersten und/oder der zweiten Stirnseite (11, 12) zurückspringenden Flansch (36) abstehen.

6. Mehrkomponentenrad (1) nach einem der vorgenannten Ansprüche,
**dadurch gekennzeichnet, dass**
die mindestens eine Lasche (40) von einer freistehenden L-förmige Zunge (41) ausgebildet ist.

7. Mehrkomponentenrad (1) nach einem der vorgenannten Ansprüche,
**dadurch gekennzeichnet, dass**
die mindestens eine Lasche (40) eine Aussparung (48) aufweist.

8. Mehrkomponentenrad (1) nach einem der vorgenannten Ansprüche,
**dadurch gekennzeichnet, dass**
die mindestens eine Lasche (40) aus einer Ausnehmung (46) herausragt.

9. Mehrkomponentenrad (1) nach einem der vorgenannten Ansprüche,
**dadurch gekennzeichnet, dass** wenigstens eine die erste Stirnseite (11) und die innere Mantelfläche des Außenteils (30) verbindende Tasche (50) und/oder wenigstens eine die zweite Stirnseite (12) und die innere Mantelfläche (34) des Außenteils (30) verbindende Tasche (50) vorgesehen ist.

10. Mehrkomponentenrad (1) nach Anspruch 9,
**dadurch gekennzeichnet, dass**
die wenigstens eine Tasche (50) die äußere Mantelfläche (24) des Innenteils (20) bereichsweise freilegt.

11. Mehrkomponentenrad (1) nach einem der Ansprüche 9 oder 10,
**dadurch gekennzeichnet, dass**
die Anzahl der Laschen (40) auf der ersten Stirnseite (11) und auf der zweiten Stirnseite (12) gleich ist und/oder dass die Anzahl der Taschen (50) auf der ersten Stirnseite (11) und auf der zweiten Stirnseite (12) gleich ist.

12. Mehrkomponentenrad (1) nach den Ansprüchen 9 bis 11,
**dadurch gekennzeichnet, dass**
die wenigstens eine Lasche (40) auf der ersten Stirnseite (11) und die wenigstens eine Lasche (40) auf der zweiten Stirnseite (12) in der Umlaufrichtung in Richtung der Drehachse (X) zueinander fluchtend angeordnet sind.

13. Mehrkomponentenrad (1) nach den Ansprüchen 9 bis 12,
**dadurch gekennzeichnet, dass**
die wenigstens eine Tasche (50) auf der ersten Stirnseite (11) und/oder der zweiten Stirnseite (12) in Umlaufrichtung in Richtung der Drehachse (X) fluchtend zu der wenigstens einen Lasche (40) auf der jeweils anderen Stirnseite (11, 12) angeordnet ist.

14. Mehrkomponentenrad (1) nach einem der vorgenannten Ansprüche,
**dadurch gekennzeichnet, dass**
das Außenteil (30) auf der ersten und/oder der zweiten Stirnseite (11, 12) zwei oder mehrere in Umlaufrichtung freistehende Laschen (40) aufweist, und dass zwischen zwei benachbarten Laschen (40) ein Freibereich (45) ausgebildet ist.

15. Mehrkomponentenrad (1) nach einem der Ansprüche 9 bis 13,
**dadurch gekennzeichnet, dass**
in der Umlaufrichtung in dem Freibereich (45) die wenigstens eine Tasche (50) angeordnet ist und/oder dass über den gesamten Freibereich (45) die wenigstens eine Tasche (50) angeordnet ist.

16. Mehrkomponentenrad (1) nach einem der vorgenannten Ansprüche,
**dadurch gekennzeichnet, dass** mindestens eine Bindenaht (33) ausgebildet ist und dass die mindestens eine Lasche (40) in der Umlaufrichtung beabstandet zu der mindestens einen Bindenaht (33) angeordnet ist.

17. Mehrkomponentenrad (1) nach einem der vorgenannten Ansprüche,
**dadurch gekennzeichnet, dass**
das Innenteil (20) eine Welle oder ein Wälzlager mit einem Innenring (21) und einem Außenring (22) ist.

18. Mehrkomponentenrad (1) nach Anspruch 17,
**dadurch gekennzeichnet, dass**
die wenigstens eine Lasche (40) des Außenteils (30) auf die erste Stirnseite (11) und/oder die zweite Stirnseite (12) des Außenrings (22) in einer Radialrichtung um wenigstens 0,5mm ragt, jedoch den Außenring (22) in der Radialrichtung nicht überragt.

19. Zahnrad (2), insbesondere Planetenrad, gebildet aus einem Mehrkomponentenrad (1) nach einem der Ansprüche 1 bis 18.

20. Planetengetriebe (3) aufweisend wenigstens ein Zahnrad (2) mit den Merkmalen des Patentanspruchs 19.

## Claims

1. Multicomponent gearwheel (1), with an axis of rotation (X), and with a first end face (11) and a second end face (12), comprising:
- an inner part (20), and
- an outer part (30),
- wherein the outer part (30) is arranged on the inner part (20) on an outer lateral surface (24) of the inner part (20) in a form and/or material-locking manner,
- wherein the outer part (30) comprises, on the first and/or second end face, at least one detached lug (40)
**characterized in that**
the outer part (30) is made of plastic and has at least one injection molding section (32), and **in that** the detached lug (40) protrudes, beginning from an inner lateral surface (34) of the outer part (30), in the direction of the axis of rotation (X) and extends, at least in sections, onto the respective end face (11, 12) of the inner part (20).

2. Multicomponent gearwheel (1) in accordance with claim 1, **characterized in that**
the outer part (30) comprises a gear rim (35).

3. Multicomponent gearwheel (1) in accordance with either of the preceding claims, **characterized in that**
the lugs (40) are arranged circumferentially symmetrical.

4. Multicomponent gearwheel (1) in accordance with any of the preceding claims **characterized in that**
the number of lugs (40) on the first and on the second end face (11, 12) is identical.

5. Multicomponent gearwheel (1) in accordance with any of the preceding claims **characterized in that**
the lugs (40) protrude from a flange (36) set back from the first and/or from the second end face (11, 12).

6. Multicomponent gearwheel (1) in accordance with any of the preceding claims **characterized in that**
the at least one lug (40) is formed from a free-standing L-shaped tongue (41).

7. Multicomponent gearwheel (1) in accordance with any of the preceding claims **characterized in that**
the at least one lug (40) comprises a recess (48).

8. Multicomponent gearwheel (1) in accordance with any of the preceding claims **characterized in that**
the t least one lug (40) extends out of a recess (46).

9. Multicomponent gearwheel (1) in accordance with any of the preceding claims **characterized in that**
at least one pocket (50) connecting the first end face (11) and the inner lateral surface of the outer part (30) and/or at least one pocket (50) connecting the second end face (12) and the inner lateral surface (34) of the outer part (30).

10. Multicomponent gearwheel (1) in accordance with claim 9,
**characterized in that** the at least one pocket (50) partially exposes the outer lateral surface (24) of the inner part (20).

11. Multicomponent gearwheel (1) in accordance with either claim 9 or claim 10, **characterized in that**
the number of lugs (40) on the first end face (11) and on the second end face (12) is identical and/or **in that** the number of pockets (50) on the first end face (11) and on the second end face (12) is identical.

12. Multicomponent gearwheel (1) in accordance with the claims 9 to 11,
**characterized in that**
the at least one lug (40) is arranged on the first end face (11), and the at least one lug (40) is arranged on the second end face (12), in the circumferential direction in the direction of the axis of rotation (X) in alignment with each other.

13. Multicomponent gearwheel (1) in accordance with claims 9 to 12,
**characterized in that**
the at least one pocket (50) is arranged on the first end face (11) and/or on the second end face (12) in circumferential direction in the direction of the axis of rotation (X) in alignment with the at least one lug (40) on the respective other end face (11, 12).

14. Multicomponent gearwheel (1) in accordance with any of the preceding claims **characterized in that** the outer part (30) comprises two or more, in circumferential direction, free-standing lugs (40), and **in that** an open area (45) is formed between two adjacent lugs (40).

15. Multicomponent gearwheel (1) in accordance with any of claims 9 to 13,
**characterized in that**
the at least one pocket (50) is arranged in circumferential direction in the open area (45) and/or **in that** the at least one pocket (50) is arranged over the entire open area (45).

16. Multicomponent gearwheel (1) in accordance with any of the previous claims, **characterized in that**
at least one weld line (33) is formed, and **in that** the at least one lug (40) is arranged in circumferential direction at a distance to the at least one weld line (33).

17. Multicomponent gearwheel (1) in accordance with any of the preceding claims, **characterized in that**
the inner part (20) is a shaft or a roller bearing having an inner ring (21) and an outer ring (22).

18. Multicomponent gearwheel (1) in accordance with claim 17,
**characterized in that**
the at least one lug (40) of the outer part extends onto the first end face (11) and/or the second end face (12) of the outer ring (22) in a radial direction by at least 0.5 mm, but does not extend over the outer ring (22) in the radial direction.

19. Gear wheel, in particular a planet gear, formed from a Multicomponent gearwheel (1) in accordance with any of claims 1 to 18.

20. Planetary gear (3) comprising at least one gear wheel (2) having the features of claim 19.

## Revendications

1. Roue à composants multiples (1) ayant un axe de rotation (X) et un premier côté frontal (11) et un second côté frontal (12) comprenant :
- une partie intérieure (20), et
- une partie extérieure (30),
- la partie extérieure (30) est prévue sur la surface-enveloppe extérieure (24) de la partie intérieure (20) par une liaison par la forme et/ou par la matière sur cette partie intérieure (20),
- la partie extérieure sur le premier côté frontal et/ou le second côté frontal comporte au moins une patte (40) en saillie dans la direction périphérique autour de l'axe de rotation,
roue **caractérisée en ce que**
- la partie extérieure (30) est en matière plastique avec au moins un segment d'injection (32), et
- la patte en saillie (40) partant de la surface enveloppe intérieure (34) de la partie extérieure (30), est en saillie en direction de l'axe de rotation (X) et vient au moins par segment sur le côté frontal respectif (11, 12) de la partie intérieure (20).

2. Roue à composants multiples (1) selon la revendication 1, **caractérisée en ce que**
la partie extérieure (30) a une couronne dentée (35).

3. Roue à composants multiples (1) selon l'une des revendications précédentes,
**caractérisée en ce que**
les pattes (40) sont symétriques en périphérie.

4. Roue à composants multiples (1) selon l'une des revendications précédentes,
**caractérisée en ce que**
le nombre de pattes (40) est le même sur le premier et le second côté frontal (11, 12).

5. Roue à composants multiples (1) selon l'une des revendications précédentes,
**caractérisée en ce que**
les pattes (40) sont en relief par rapport à l'abri (36) en retrait du premier et/ou du second côté frontal (11, 12).

6. Roue à composants multiples (1) selon l'une des revendications précédentes,
**caractérisée en ce que**
au moins une patte (40) est formée par une languette (41) avec une forme de L, en saillie.

7. Roue à composants multiples (1) selon l'une des revendications précédentes,
**caractérisée en ce que**
la patte (40) a un évidemment (48).

8. Roue à composants multiples (1) selon l'une des revendications précédentes,
**caractérisée en ce que**
la patte (40) dépasse d'un évidemment (46).

9. Roue à composants multiples (1) selon l'une des revendications précédentes,
**caractérisée par**
au moins une poche (50) reliant le premier côté frontal (11) et la surface enveloppe intérieure de la partie extérieure (30) et/ou au moins une poche (50) reliant le second côté frontal (12) et la surface enveloppe intérieure (34) de la partie extérieure (30).

10. Roue à composants multiples (1) selon la revendication 9,
**caractérisée en ce que**
la poche (50) laisse dégagée par zone, la surface enveloppe extérieure (24) de la partie intérieure (20).

11. Roue à composants multiples (1) selon l'une des revendications 9 ou 10,
**caractérisée en ce que**
le nombre de pattes (40) sur le premier côté frontal (11) et sur le second côté frontal (12) est le même et/ou le nombre de poches (50) sur 1 premier côté face frontal (11) et sur le second côté frontal (12) est le même.

12. Roue à composants multiples (1) selon l'une des revendications 9 à 11,
**caractérisée en ce que**
au moins la patte (40) sur le premier côté frontal (11) et au moins la patte (40) sur le second côté frontal (12) sont alignées l'une par rapport à l'autre dans la direction périphérique, vers l'axe de rotation (X).

13. Roue à composants multiples (1) selon l'une des revendications 9 à 12,
**caractérisée en ce que**
au moins une poche (50) sur le premier côté frontal (11) et/ou le second côté frontal (12) dans la direction périphérique, en direction de l'axe de rotation (X) sont alignées par rapport à la patte (40) sur le côté frontal (11, 12) respectivement opposé.

14. Roue à composants multiples (1) selon l'une des revendications précédentes,
**caractérisée en ce que**
la partie extérieure (30) comporte sur le premier et/ou le second côté frontal (11, 12), deux ou plusieurs pattes (40) en saillie dans la direction périphérique et
une zone dégagée (45) est prévue entre deux pattes voisines (40).

15. Roue à composants multiples (1) selon l'une des revendications 9 à 13,
**caractérisée en ce que**
dans la direction périphérique, dans la zone dégagée (45), il y a au moins une poche (50) et/ou sur toute la zone dégagée (45) se trouve une poche (50).

16. Roue à composants multiples (1) selon l'une des revendications précédentes,
**caractérisée en ce que**
au moins un cordon de liaison (33) est prévu et au moins la patte (40) est écartée dans la direction périphérique par rapport à ce cordon de liaison (33).

17. Roue à composants multiples (1) selon l'une des revendications précédentes,
**caractérisée en ce que**
la partie intérieure (20) est un arbre ou un pallier à roulement ayant une bague intérieure (21) et une bague extérieure (22).

18. Roue à composants multiples (1) selon la revendication 17, **caractérisée en ce que**
au moins une patte (40) de la partie extérieure (30) sur le premier côté frontal (11) et/ou le second côté frontal (12) de la bague extérieure (22) dépasse d'au moins 0,5 mm dans la direction radiale, sans dépasser de la bague extérieure (22) dans la direction radiale.

19. Roue dentée (2), notamment roue planétaire formée d'une roue à composants multiples (1) selon l'une des revendications 1 à 18.

20. Transmission épicycloïdale (3) comprenant au mins une roue dentée (2) avec les caractéristiques de la revendication 19.
